# EUROPÄISCHE PATENTANMELDUNG

(11) **EP 3 553 108 A1**
(43) Veröffentlichungstag der Anmeldung: **16.10.2019**
(21) Anmeldenummer: 19168742.5
(22) Anmeldetag: 11.04.2019
(51) Int. Cl.: C08G 18/67, C08G 85/00, C08G 18/76, C08G 18/42, C09J 175/16

(54) **MEHRLAGIGES VERBUNDSYSTEM, VERFAHREN ZU DESSEN HERSTELLUNG UND VERWENDUNG VON KLEBSTOFFEN MIT DEFINIERTER ZERSETZUNGSTEMPERATUR FÜR DIE HERSTELLUNG VON MEHRLAGIGEN VERBUNDSYSTEM**

(30) Priorität: 11.04.2018 DE 102018205503
(71) Anmelder: FRAUNHOFER-GESELLSCHAFT zur Förderung der angewandten Forschung e.V., 80686 München (DE)
(72) Erfinder: Kaiser, Katharina, 85354 Freising (DE)
(74) Vertreter: Pfenning, Meinig & Partner mbB

(57) **Zusammenfassung**

Die vorliegende Erfindung betrifft ein mehrlagiges Verbundsystem mit einer ersten und mindestens einer weiteren Materiallage, die mittels eines Klebstoff mit einer definierten Zersetzungstemperatur zumindest bereichsweise stoffschlüssig miteinander verbunden sind, wobei die stoffschlüssige Verbindung bei Erreichen der Zersetzungstemperatur gelöst wird. Weiterhin betrifft die Erfindung ein Verfahren zur Herstellung eines mehrlagigen Verbundsystems. Verwendung findet der erfindungsgemäße Klebstoff bei der Herstellung beliebiger mehrlagige Verbundsysteme.

## Beschreibung

Die vorliegende Erfindung betrifft ein mehrlagiges Verbundsystem mit einer ersten und mindestens einer weiteren Materiallage, die mittels eines Klebstoff mit einer definierten Zersetzungstemperatur zumindest bereichsweise stoffschlüssig miteinander verbunden sind, wobei die stoffschlüssige Verbindung bei Erreichen der Zersetzungstemperatur gelöst wird. Weiterhin betrifft die Erfindung ein Verfahren zur Herstellung eines mehrlagigen Verbundsystems. Verwendung findet der erfindungsgemäße Klebstoff bei der Herstellung beliebiger mehrlagige Verbundsysteme.

Zu den bekanntesten mehrlagige Verbundsysteme zählen Multilayer-Verpackungen, die 41 m²-% der Lebensmittelverpackungen ausmachen, da die Kombination verschiedener Materialien optimale Schutzbedingungen für unterschiedliche Lebensmittel bietet. Da der derzeitige Stand der Sortierung und der Verwertung von Verpackungen lediglich auf Monokunststoffe abzielt, werden Mehrlagenverbunde energetisch verwertet. Da die verschiedenen, in Multilayer-Verpackungen enthaltenen, Polymere untereinander nicht mischbar sind, ist eine Trennung der unterschiedlichen Schichten zum getrennten Recycling der unterschiedlichen Bestandteile erstrebenswert.

Aus dem Stand der Technik sind bislang verschiedene Ansätze zum werkstofflichen Recycling von mehrlagigen Verpackungen bekannt. Hierzu zählen Verfahren, die eine gemeinsame Verarbeitung der verschiedenen Bestandteile von Multilayer-Verpackungen ermöglichen, als auch Verfahren, die auf einem Recycling durch Trennung der einzelnen Komponenten basieren:
- die Zersetzung von Aluminium-Schichten durch Base/Säure (DE 101 02 554 A1)
- die enzymatischen Zersetzung von Biopolymerschichten (P. Cinelli, M. Schmid, E. Bugnicourt, M.B. Coltelli, A. Lazzeri, Materials (Basel, Switzerland) 9 (2016))
- Recycling durch mechanische Einwirkung (EP 3 059 061 A1)
- die Verwendung von säure-/baselöslichen bzw. in saurem/alkalischem Milieu zersetzbaren Polymeren, die gezielt als Zwischenschicht in Verpackungen verwendet werden, und so in alkalischem/saurem Milieu eine Delamination bewirken (DE 43 280 16 A1 und US 2004/0054018 A1) und
- gezielte Reaktionen an den Grenzflächen zwischen Aluminium und Polyethylen (US 5, 421,526 A, US 2013/0319618 A1 und WO 2015/169801 A1).

Der größte Nachteil der genannten Delaminationsmethoden ist generell, dass die Methoden nur für einen stark begrenzten Einsatzbereich (z.B. nur aluminiumhaltige Verbunde) geeignet sind. Dies macht die Methoden für eine Rezyklierung von Post-Consumer Multilayer-Verpackungen nicht anwendbar, da zu geringe Mengen aus wirtschaftlichen Gründen nicht aus Post-Consumer-Verpackungsströmen aussortiert und gezielt verwertet werden können.

Zudem haben einige der erwähnten Methoden den Nachteil, dass im Vergleich zu herkömmlichen Verpackungen zusätzliche "Delaminationsschichten" in den Verpackungsaufbau integriert werden müssen, oder Schichten verwendet werden müssen, die derzeit auf dem Markt nicht gebräuchlich sind. Methoden in denen Aluminium oder ein Polymer zersetzt werden haben den Nachteil, dass diese zersetzte Schicht nicht direkt werkstofflich rezykliert wird. Aus dem Stand der Technik sind weiterhin reversibel vernetzende Klebstoffsysteme bekannt, die z.B. auf der Bildung von Diels-Alder-Addukten bei moderaten Temperaturen und der Zersetzung über eine *retro*-Diels-Alder-Reaktion bei erhöhten Temperaturen basieren.

In Z. Gou, Y. Zuo, S. Feng, RSC Adv 6, 73140 (2016) wird ein selbstheilendes Polysiloxan-Netzwerk basierend auf der Thiolen-Reaktion und der Diels-Alder-Reaktion mit potentieller Anwendung in rezyklierbaren Klebstoffen für Glas beschrieben.

Luo et al. beschreiben die Synthese von Epoxy-haltigen Polymeren, wobei die reaktiven Epoxy-Gruppen über labile, durch eine Diels-Alder-Reaktion erzeugte Oxonorboren-Einheit an das Polymer-Rückgrat gebunden sind. Diese Polymere können in Anwesenheit von Diaminen vernetzt werden, wobei diese bei erhöhten Temperaturen durch Spaltung des Oxonorboren-Addukts wieder aufgehoben werden kann. (K. Luo, T. Xie, J. Rzayev, J. Polym. Sci. Part A: Polym. Chem. 51, 4992 (2013)).

Aus D.H. Turkenburg, H. van Bracht, B. Funke, M. Schmider, D. Janke, H.R. Fischer, J. Appl. Polym. Sci. 134, 2194 (2017)ist die Synthese eines Präpolymers mit terminalen Furaneinheiten bekannt, bei der ein niedermolekulares Polyesterdiol mit einem Diisocyanat in Anwesenheit von Fururylalkohol polymerisiert wird. Die Kettenlänge kann hierbei über die Menge an kettenterminierenden Furfurylakoholen gesteuert werden. Die Umsetzung der Furfurylalkohol terminierten Präpolymere mit Bismaleimiden ergibt ein thermoreversibel-vernetzendes Polyurethan-Netzwerk.

Aus US2003/0116272 A1 sind thermisch entfernbare Epoxy-Klebstoffe mit eingebauten thermisch-labilen Diels-Alder-Addukten bekannt. Hierzu werden Bismaleimide mit Epoxy-haltigen Furan-Derivaten zu Diepoxiden umgesetzt, welche thermisch-labile Diels-Alder-Addukte enthalten. Das nach der Polymerisation erhaltene Epoxyamin-System kann durch Induzierung der *retro*-Diels-Alder-Reaktion abgebaut werden.

In US 6,403,753 B1 sind thermisch abbaubare Polyurethane beschrieben, die ausgehend von Diels-Alder-Addukt enthaltenden Diol- bzw. Diisocyanat-Monomeren hergestellt wurden. Hierfür wurden entweder Bismaleimide oder Bisfurane zu Diol- bzw. Diisocyanat-Monomeren umgesetzt.

Den hier genannten Klebstoffen ist gemein, dass bei diesen eine Migration von Spaltungsprodukten des polymerisierten Systems oder nicht umgesetzten Ausgangstoffen nicht ausgeschlossen werden kann.

In US 6,403,753 B1 kann beispielsweise, bei Einwirkung höherer Temperaturen während der Lebenszeit des Verbundsystemes niedermolekulare Bismaleimide/Bisfurane freigesetzt werden, da Monomere verwendet werden, die zwei Diels-Alder-Addukte enthalten,

Ausgehend hiervon war es Aufgabe der vorliegenden Erfindung, einen Klebstoff bereit zu stellen, der eine leichte Trennbarkeit von mehrlagigen Verbundsystemen ermöglicht und bei dem eine Migration von Klebstoffbestandteilen ausgeschlossen ist.

Diese Aufgabe wird durch das mehrlagige Verbundsystem mit den Merkmalen des Anspruchs 1 und das Verfahren zur Herstellung eines mehrlagigen Verbundsystems mit den Merkmalen des Anspruchs 12 gelöst. In Anspruch 16 wird eine erfindungsgemäße Verwendung des Klebstoffs angegeben. Die weiteren abhängigen Ansprüche zeigen vorteilhafte Weiterbildungen auf.

Erfindungsgemäß wird ein mehrlagiges Verbundsystem mit einer ersten und mindestens einer weiteren Materiallage bereitgestellt, wobei benachbarte Materiallagen zumindest bereichsweise mittels eines Klebstoffs stoffschlüssig miteinander verbunden sind. Der Klebstoff weist dabei eine Zersetzungstemperatur T_{ZK} im Bereich von 50° C bis zur Auflösungstemperatur des Verbundsystems auf. Bei Erreichen der Zersetzungstemperatur löst sich die stoffschlüssige Verbindung zwischen den Materiallagen wieder auf, wodurch eine Trennung der Materiallagen voneinander ermöglicht wird.

Die erfindungsgemäßen Klebstoffe erfüllen aufgrund ihrer Eigenschaft, sich bei einer definierten Temperatur zu zersetzen, alle verpackungsrelevanten Anforderungen bezüglich Verarbeitbarkeit und mechanischen Eigenschaften und sind zudem unbedenklich für das zu verpackende Füllgut. Entscheidend ist hierbei, dass der Verpackungsklebstoff eine einfache Trennung der Bestandteile des Verbundsystems ermöglicht.

Es ist bevorzugt, dass der Klebstoff durch Bildung kovalenter Bindungen aktivierbar und bei der Zersetzungstemperatur T_{ZK} durch Spaltung dieser kovalenten Bindungen zersetzbar ist. Es handelt sich somit bei der Aktivierung und Zersetzung um eine reversible Reaktion. Geeignete Reaktionstypen sind beispielsweise eine (Hetero-)Diels-Alder-Cycloaddition für die Aktivierung und eine (Hetero-)Retro-Diels-Alder-Reaktion für die Zersetzung. Weitere Reaktionen sind beispielsweise nukleophile Additionen zwischen Isocyanaten und Imidazolen, Carbendimerisierungen oder die reversible radikalische Kopplung zwischen einem stabilisierten Radikal wie 2,2,6,6-Tetramethylpiperidinyloxyl (TEMPO) und Styrolradikalen.

Gemäß einer bevorzugten Ausführungsform der vorliegenden Erfindung werden als Ausgangsstoffe für die Klebstoffe Präpolymere mit einer Molmasse von bevorzugt mindestens 500 g/mol, besonders bevorzugt mindestens 1000 g/mol und ganz besonders bevorzugt von 1500 g/mol bis 10000 g/mol (Bestimmung durch Gelpermeationschromatographie (GPC) gemäß DIN EN ISO 16014-5 - 2012-10) eingesetzt, die so groß sind, so dass eine Migration innerhalb des Verbundsystems ausgeschlossen ist. Der Vorteil dieses Prinzip ist es, dass aufgrund der vergleichsweise hohen Molmassen des Diens und des Dienophils auch bei unvollständigem Ablauf der Diels-Alder-Reaktion keine Migration zu erwarten ist.

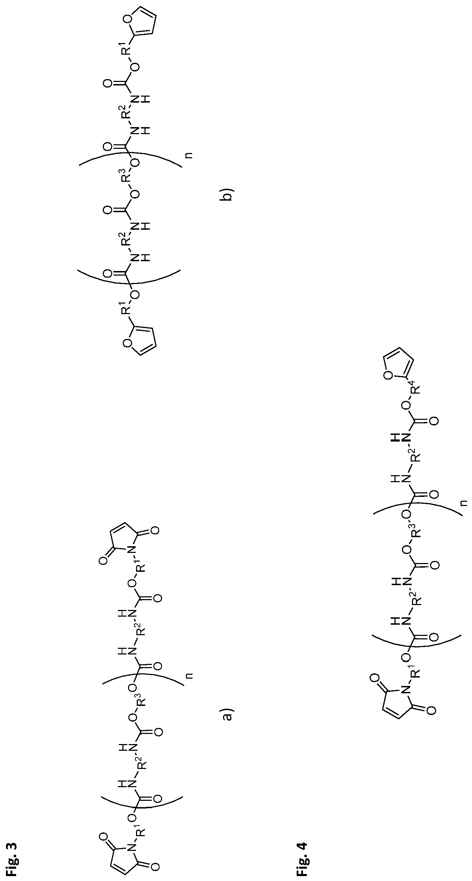

In einer bevorzugten Ausführungsform handelt es sich bei den Präpolymeren um Präpolymere, die zwei gleiche endständige Funktionalisierungen aufweisen, d.h. vom Typ AA (z.B. Maleimid-terminierte Präploymere) und vom Typ BB (z.B. Furan-terminierte Präpolymere). Zwei beispielhafte Präpolymere diesen Typs sind in Fig.3 dargestellt. Diese Präpolymere sind in der Lage miteinander Diels-Alder-Addukte auszubilden und Polymerketten mit dem Aufbau-AA-BB-AA-BB-zu formen.

Durch Wahl geeigneter funktioneller Gruppen der Reaktanten und geeigneter Präpolymere kann dasselbe Prinzip auch auf die Epoxid-Klebstoffsysteme angewandt werden.

Eine weitere bevorzugte Ausführungsform sieht vor, dass ein Präpolymer mit unterschiedlichen Funktionalitäten verwendet wird, d.h. das Präpolymer enthält sowohl ein terminales Dien als auch ein terminales Dienophil. Dieses Präpolymer wird im folgenden als AB-Präpolymer bezeichnet. Ein Beispiel hierfür ist in Fig. 4 dargestellt. Unter geeigneten Bedingungen kann dieses AB-Präpolymer ein Polymer mit dem Aufbau -AB-AB-AB-AB- bilden.

Da der Syntheseweg jedoch keine reine AB-Präpolymerbildung ermöglicht, ist zudem die Zugabe von AA- und BB-Präpolymeren bevorzugt, sodass es zur Bildung von Polymeren mit dem Aufbau -AB-AA-BB-AB- kommt.

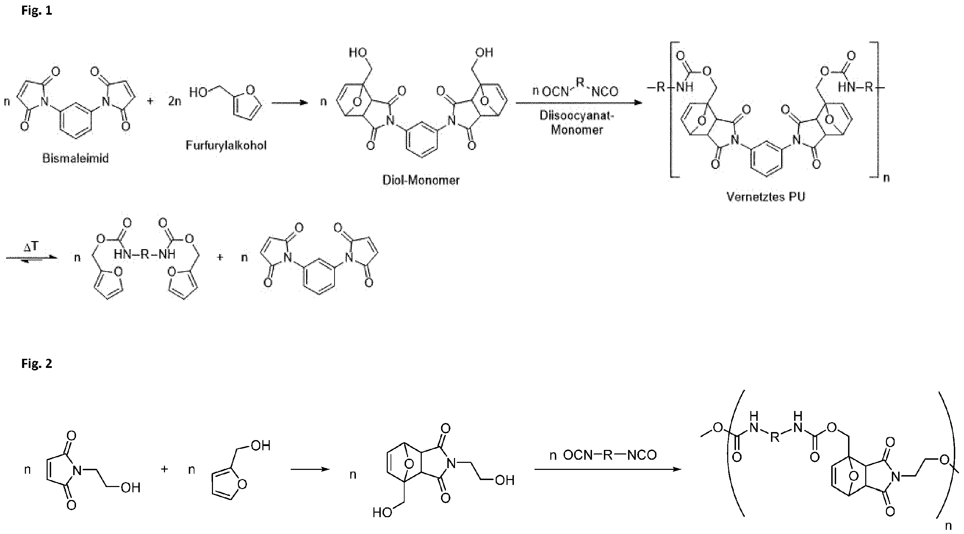

Eine weitere bevorzugte Ausführungsform sieht vor, dass als adduktenthaltende Monomere solche eingesetzt werden, die maximal ein Addukt enthalten. Solche ein adduktenthaltendes Monomer und dessen Synthese ist in Fig. 2 dargestellt. Im Unterschied zu den Klebstoffen des Standes der Technik werden hier nicht Bismaleimide bzw. Bisfurane mit OH- oder NCO-funtkionalisierten Furan- bzw. Maleimidderivaten zu einem Diol- bzw. Diisocyanat-Monomer, sondern direkt ein OH-/NCO-funktionalisiertes Maleimid mit einem OH-/NCO-funktionalisiertem Furanderivat umgesetzt. Dies hat zum Vorteil, dass bei Hitzeeinwirkung auf die Verpackung kein niedermolekularer Bestandteil (Bismaleimid) frei wird, welcher anschließend migrieren kann.

Die Zersetzungstemperatur T_{ZK} liegt vorzugsweise im Bereich von 70 bis150° C, bevorzugt von 80 bis 135° C und besonders bevorzugt von 90 bis 100° C.

Dabei ist es bevorzugt, dass der Klebstoff mit einem Lösemittel rückstandsfrei auflösbar ist. Dies kann dadurch erreicht werden, dass in einem Lösemittel, z.B. DMSO, Alkohole mit Siedepunkt > T(rDA), bzw. einem Lösemittelgemisch wie Wasser/Alkohol, wobei als Alkohol z.B. n-Butanol oder andere Alkohole mit ausreichend hohen Siedepunkten verwendet werden kann, kann der verklebte Verbund (z.B. PE/HV/PA) in maximal 3 h, bevorzugt maximal 1 h und besonders bevorzugt maximal 30 min aufgetrennt werden. Die Zersetzungsprodukte des Klebstoffes werden im Lösemittel solubilisiert. Die getrennten Verbundbestandteile bzw. Materiallagen teilen sich nach der Trennung je nach Dichte in eine Schwimm- und Sinkfraktion auf. Die Dichte des Lösemittels liegt im Bereich von 0,98 g/cm³ bis 1,10 g/cm³, wodurch eine Abtrennung der polyolefininischen Verpackungsbestandteile von anderen Polymerkomponenten erfolgen kann. Die in der Sinkfraktion enthaltenen Bestandteile können gegebenenfalls über weitere Trennmethoden, wie z.B. Nahinfrarotsortierung, getrennt werden.

Es ist weiter bevorzugt, dass die bei der Zersetzung des Klebstoffs gebildeten Zersetzungsprodukte eine Molmasse von mindestens 500 g/mol, bevorzugt 1000 g/mol, besonders bevorzugt 1500 g/mol bis 10000 g/mol (Bestimmung durch Gelpermeationschromatographie (GPC) gemäß DIN EN ISO 16014 - 2012-10) zur Vermeidung der Migration der Zersetzungsprodukte in den Materiallagen aufweisen.

Eine weitere bevorzugte Ausführungsform sieht vor, dass der Klebstoff aus mindestens einem Dien, bevorzugt ausgewählt aus der Gruppe bestehend aus Furanen, Fulvenen, Anthracenen, Cyclopentadienen und Mischungen hiervon, besonders bevorzugt Furane mit Amin- und Hydroxyl-Funktionalisierung, und mindestens einem Dienophil, bevorzugt ausgewählt aus der Gruppe bestehend aus Maleimiden, Dithioestern Tricyanoacrylaten, Nitrosocarbonylen, Dicyclopentadienen und Mischungen hiervon gebildet ist.

Vorzugsweise sind die Materiallagen ausgewählt aus der Gruppe bestehend aus Polymerfolien, Papierlagen, Aluminiumfolien oder Verbunden hiervon, die zusätzlich bedruckt, beschichtet oder metallbedampft sein können.

Vorzugsweise sind die Materiallagen zerstörungsfrei separierbar. Diese bedeutet, dass nach der Zersetzung und Abtrennung des Klebstoffs eine Trennung der einzelnen Materiallagen dadurch erfolgen kann, dass diese einer Dichtetrennung unterzogen werden. Dabei teilen sich die getrennten Verbundbestandteile/Materiallagen nach der Trennung je nach Dichte in eine Schwimm- und Sinkfraktion auf. Die Dichte des Lösemittels befindet sich zwischen 0,98 g/cm³ und 1,10 g/cm³, wodurch eine Abtrennung der polyolefininischen Verpackungsbestandteile von anderen Polymerkomponenten erfolgen kann. Die in der Sinkfraktion enthaltenen Bestandteile können gegebenenfalls über weitere Trennmethoden, wie beispielsweise Nahinfrarotsortierung getrennt werden.

Die Polymerfolien sind dabei vorzugsweise ausgewählt aus Polymeren der Gruppe bestehend aus Polyolefine, insbesondere Polyethylen und Polypropylen,
- Polyamide, insbesondere aus der Gruppe der aliphatischen oder teilaromatischen Polyamide,
- Polyester, insbesondere Polyethylenterephthalat,
- Polystyrol sowie
- deren Copolymere und Blends.

Vorzugsweise ist das Mehrlagenverbundsystem ausgewählt aus der Gruppe der Verpackung, insbesondere in Form von Flaschen, Becher, Tuben, Schalen und Folien oder Etiketten. Bevorzugt sind dabei Mehrschichtfolien, insbesondere solche, die aus einzelnen Folien aus unterschiedlichen Materialien bestehen.

Die erfindungsgemäßen Verbundsysteme haben den Vorteil, dass eine systematische Delamination für eine Vielzahl an Verbundsystemen ermöglicht wird. Dadurch wird eine gezielte Sortierung und wirtschaftliche Verwertung von Multilayer-Verpackungen ermöglicht.

Der größte Vorteil gegenüber den aus dem Stand der Technik bekanntem Klebstoffen ist, dass Ausgangskomponenten mit einer Molmasse verwendet werden, die keiner Migration durch die verwendeten Verpackungsmaterialien zum Füllgut unterliegen. Unvollständiger Umsatz der Reaktanden und unerwünschte Spaltung des Adduktes kann somit keine migrierbaren Substanzen freisetzen.

Erfindungsgemäß wird ebenso ein Verfahren zur Herstellung eines mehrlagigen Verbundsystems mit mindestens zwei Materiallagen bereitgestellt, bei dem
a) zwischen benachbarten Materiallagen zumindest bereichsweise ein Klebstoff aufgetragen wird, wobei der Klebstoff eine Zersetzungstemperatur T_{ZK} im Bereich von 50°C bis zur Auflösungstemperatur aufweist und die stoffschlüssige Verbindung zwischen den Materiallagen bei Erreichen der Zersetzungstemperatur T_{ZK} aufgelöst wird,
b) durch eine Aktivierung der Klebstoff die stoffschlüssige Verbindung zwischen Materiallagen erzeugt wird.

Es ist bevorzugt, dass der Klebstoff als Lösung aufgetragen und thermisch aktiviert wird oder der Klebstoff als Suspension oder Schmelze aufgetragen wird und die Aktivierung durch Vertreiben des Suspensierungsmittels erfolgt.

Eine weitere bevorzugte Ausführungsform sieht vor, dass der Klebstoff durch eine reversible Cycloaddition aktiviert wird und bei der Zersetzungstemperatur T_{ZK} zersetzt wird, insbesondere über eine Diels-Alder-Cycloaddition aktiviert und über eine Retro-Diels-Alder-Reaktion zersetzt.

Vorzugsweise wird der Klebstoff aus mindestens einem Dien, bevorzugt ausgewählt aus der Gruppe bestehend aus Furanen, Fulvenen, Anthracenen, Cyclopentadienen und Mischungen hiervon und mindestens einem Dienophil, bevorzugt ausgewählt aus der Gruppe bestehend aus Maleimiden, Dithioestern, Tricyanoacrylaten, Nitrosocarbonylen, Dicyclopentadienen und Mischungen hiervon gebildet.

Die erfindungsgemäßen Klebstoffe werden zur lösbaren stoffschlüssigen Verbindung von Materiallagen in Mehrlagen-Verbundsystemen bereitgestellt, wobei der Klebstoff einer Zersetzungstemperatur T_{ZK} im Bereich von 50° C bis zur Auflösungstemperatur des Verbundsystems aufweist und bei Erreichen der Zersetzungstemperatur die stoffschlüssige Verbindung aufgelöst wird.

Anhand der nachfolgenden Figuren und Beispiele soll der erfindungsgemäße Gegenstand näher erläutert werden, ohne diesen auf die hier gezeigten spezifischen Ausführungsformen einschränken zu wollen.

### Meßmethoden

Die Bestimmung der Molmassen erfolgt in Abhängigkeit von der Löslichkeit des Polymers in bestimmten Lösungsmitteln nach folgenden Verfahren:

### 1. Methode (THF)

Messung erfolgte in Anlehnung an die DIN 55672. Dazu wurden von jeder Probe zwei Lösungen mit einer Konzentration von 5000 ppm (mg/g) in Tetrahydrofuran (THF) hergestellt. Die Lösungen wurden 24 h stehen gelassen, um eine vollständige Lösung der Polymere zu gewährleisten. Vor der Messung wurde jede Probe durch einen 0,20 µm PTFE-Filter filtriert.

Die Bestimmung der Molmassen erfolgte rechnergestützt über die so genannte Streifenmethode in einer Doppelbestimmung. Dabei wird der eluierte Peak in mehrere äquidistante Volumenscheiben unterteilt, die mit der Messfrequenz identisch sind. Über die Kalibrierung wurden die Elutionsvolumina in Molmassen transformiert.

Als Kalibrierstandards wurden in THF gelöste engverteilte Polystyrole (PS) verwendet. Die Molmasse der Proben wurden anhand der Referenz bewertet und grafisch ausgewertet.

### 2. Methode (Hexafluorisopropanol)

Die Messung erfolgte in Anlehnung an die DIN 55672. Dazu wurden von jeder Probe zwei Lösungen mit einer Konzentration von 2500 ppm (mg/g) in Hexafluorisopropanol (HFIP) hergestellt. Die Lösungen wurden 24 h stehen gelassen, um eine vollständige Lösung der Polymere zu gewährleisten. Vor der Messung wurde jede Probe durch einen 0,20 µm PTFE-Filter filtriert.

Die Bestimmung der Molmassen erfolgte rechnergestützt über die so genannte Streifenmethode in einer Doppelbestimmung. Dabei wird der eluierte Peak in mehrere äquidistante Volumenscheiben unterteilt, die mit der Messfrequenz identisch sind. Über die Kalibrierung wurden die Elutionsvolumina in Molmassen transformiert.

Als Kalibrierstandards wurden in HFIP gelöste engverteilte Polymethylmethacrylat (PMMA) verwendet. Die Molmasse der Proben wurden anhand der Referenz bewertet und grafisch ausgewertet.
Fig. 1 stellt anhand eines Reaktionsschemas die Bildungs- und Zersetzungsreaktion eines Klebstoffs gemäß Stand der Technik dar
Fig.2 zeigt anhand eines Reaktionsschemas die Synthese eines erfindungsgemäß eingesetzten Klebstoffs
Fig. 3 zeigt Präpolymere als Ausgangsstoffe für einen erfindungsgemäß eingesetzten Klebstoff
Fig. 4 zeigt ein Präpolymer als Ausgangsstoff für einen erfindungsgemäß eingesetzten Klebstoff

In Fig. 1 ist ein Reaktionsschema dargestellt, nach dem aus Bismaleimid und Furfurylalkohol ein Diol-Monomer gebildet wird, das mit einem Diisocyanat zum vernetzten Polyurethan (Diels-Alder-Addukt) reagiert. Durch Temperatureinwirkung kommt es dann zur retro-Diels-Alder-Reaktion und Aufspaltung des Diels-Alder-Addukts.

In Fig. 2 ist die Bildung eines erfindungsgemäßen Klebstoffs dargestellt, bei dem ein OH-funktionalisiertes Maleimid mit einem Furfurylalkohol zum Diol-Monomer umgesetzt, das mit einem Diisocyanat zum Diels-Alder-Addukt reagiert. Dies hat zum Vorteil, dass bei Hitzeeinwirkung kein niedermolekularer Bestandteil frei wird, welcher anschließend migrieren kann.

In Fig. 3 ist ein Maleimid-terminiertes Polyurethan-Präpolymer (Fig. 3a)) und ein Furan-terminiertes Polyurethan-Präpolymer (Fig. 3b)) abgebildet, die durch Ausbildung von Diels-Alder-Addukten reversibel haftvermittelnde Polyurethansysteme bilden können. R¹ kann hierbei beispielsweiße eine Methyl oder Ethyl-Gruppe darstellen, R² einen konventionellen Polyester, ein konventionelles Polyurethan oder ein konventionelles Polyacrylat. R³ kann ebenfalls ein konventionelles Polyurethan, einen konventionellen Polyester oder ein konventionelles Polyacrylat darstellen.

In Fig. 4 ist ein Dien- und Dienophil-substituiertes Präpolymer dargestellt. R¹ kann hierbei beispielsweiße eine Methyl oder Ethyl-Gruppe darstellen, R² einen konventionellen Polyester, ein konventionelles Polyurethan oder ein konventionelles Polyacrylat. R³ und R⁴ können ebenfalls ein konventionelles Polyurethan, einen konventionellen Polyester oder ein konventionelles Polyacrylat darstellen.

### Beispiel 1

### Herstellung eines Furan-terminierten Präpolymers

24,525 g (250 mmol, 1,0 Äq.) Furfurylalkohol werden mit 187,500 g (375 mmol, 1,5 Äq.) Polyesterdiol unter Inertgasatmosphäre auf 50°C geheizt. Anschließend werden unter starkem Rühren langsam 125,125 g (500 mmol, 2,0 Äq.) Methylendiphenylisocyanat zugegeben. Die homogene Reaktionsmischung wird 2,5 h bei 70°C gerührt und anschließend auf Raumtemperatur abgekühlt.

### Beispiel 2

### Herstellung eines Maleimid-terminierten Präpolymers

35,293 g (250 mmol, 1,0 Äq.) N-(2-Hydroxyethyl)maleimid werden mit 187,500 g (375 mmol, 1,5 Äq.) Polyesterdiol unter Inertgasatmosphäre auf 50°C geheizt. Anschließend werden unter starkem Rühren langsam 125,125 g (500 mmol, 2,0 Äq.) Methylendiphenylisocyanat zugegeben. Die homogene Reaktionsmischung wird 2,5 h bei 70°C gerührt und anschließend auf Raumtemperatur abgekühlt. Durch eine Extraktion können niedermolekulare Bestandteile von den Polymeren abgetrennt werden.

### Beispiel 3

### Vernetzung und Applikation des Klebstoffs

Zur Vernetzung werden 269,7 g (1 Äq.) des Präpolymers aus Beispiel 1 und 278,3 g (1 Äq.) des Präpolymers aus Beispiel 2 erfolgt durch Reaktion bei Raumtemperatur über 14 Tage hinweg. Zur Verwendung als Klebstoff in einem Verbundmaterial werden die Präpolymere in einer Lösung aus z.B. Ethylacetat (Feststoffgehalt 40-50%) stöchiometrisch vermengt und anschließend wie ein üblicher Kaschierklebstoff verwendet. Hierzu wird die Reaktionsmischung nach einer Reaktionszeit von 6 Stunden per Hand oder über eine Bahn flächig auf die Materialoberfläche einer der zu verklebenden Materialien aufgetragen. Das Lösemittel wird anschließend bei kurzzeitig erhöhter Temperatur verdampft. Das Verbinden der beiden Materialien erfolgt mit erhöhtem Druck zwischen Kaschierwalzen, Kaschiertrommeln oder in Kaschierpressen.

### Beispiel 4

### Auftrennung des Verbundsystems

Die kaschierten Verbundmaterialien werden mittels eines Schredders zu Folienflakes (Fläche etwa 1 cm²) zerschnitten. Das Lösemittel Butylacetat wird auf 100°C geheizt und führt durch Herauslösen der Polymerfragmente des Klebstoffes über einen Zeitraum von 2 Stunden eine Delamination des Verbundes herbei.

## Patentansprüche

1. Mehrlagiges Verbundsystem mit einer ersten und mindestens einer weiteren Materiallage, bei dem benachbarte Materiallagen zumindest bereichsweise mittels eines Klebstoffs stoffschlüssig miteinander verbunden sind, wobei der Klebstoff eine Zersetzungstemperatur T_{ZK} im Bereich von 50°C bis zur Auflösungstemperatur des Verbundsystems aufweist und die stoffschlüssige Verbindung zwischen den Materiallagen bei Erreichen der Zersetzungstemperatur T_{ZK} aufgelöst wird.

2. Verbundsystem nach Anspruch 1,
**dadurch gekennzeichnet, dass** der Klebstoff durch Bildung kovalenter Bindungen aktivierbar und bei der Zersetzungstemperatur T_{ZK} durch Spaltung dieser kovalenten Bindungen zersetzbar ist, insbesondere über
• eine Diels-Alder-Cycloaddition oder eine Hetero-Diels-Alder-Cycloaddition aktivierbar und über eine Retro-Diels-Alder-Reaktion oder eine Retro-Hetero-Diels-Alder-Reaktion zersetzbar
• eine nukleophile Addition von Isocyanaten und Imidazolen
• eine Carbendimerisierung
• eine reversible radikalische Kopplung zwischen stabilisierten Radikalen, insbesondere 2,2,6,6-Tetramethylpiperidinyloxyl, und Styrolradikalen.

3. Verbundsystem nach einem der vorhergehenden Ansprüche,
**dadurch gekennzeichnet, dass** die Zersetzungstemperatur T_{ZK} im Bereich von 70 bis 150°C, bevorzugt von 80 bis 135°C und besonders bevorzugt von 90 bis 100°C liegt.

4. Verbundsystem nach einem der vorhergehenden Ansprüche,
**dadurch gekennzeichnet, dass** der Klebstoff nach der Zersetzung mit einem Lösungsmittel rückstandsfrei auflösbar ist.

5. Verbundsystem nach einem der vorhergehenden Ansprüche,
**dadurch gekennzeichnet, dass** die bei der Zersetzung des Klebstoffs gebildeten Zersetzungsprodukte eine Molmasse von mindestens 500 g/mol, bevorzugt 1000 g/mol, besonders bevorzugt 1500 g/mol zur Vermeidung der Migration der Zersetzungsprodukte in den Materiallagen aufweisen.

6. Verbundsystem nach einem der vorhergehenden Ansprüche,
**dadurch gekennzeichnet, dass** die für die Klebstoffe eingesetzten Ausgangsstoffe ausschließlich Präpolymere mit einer Molmasse von mindestens 500 g/mol, bevorzugt 1000 g/mol, besonders bevorzugt 1500 g/mol bis 10000 g/mol sind.

7. Verbundsystem nach einem der vorhergehenden Ansprüche,
**dadurch gekennzeichnet, dass** der Klebstoff aus mindestens einem Dien, bevorzugt ausgewählt ist aus der Gruppe bestehend aus Furanen, Fulvenen, Anthracenen, Cyclopentadienen und Mischungen hiervon, besonders bevorzugt Furane mit Amin- und Hydroxyl-Funktionalisierung, und mindestens einem Dienophil, bevorzugt ausgewählt ist aus der Gruppe bestehend aus Maleimiden, Dithioestern, Tricyanoacrylaten, Nitrosocarbonylen, Dicyclopentadienen und Mischungen hiervon gebildet ist.

8. Verbundsystem nach einem der vorhergehenden Ansprüche,
**dadurch gekennzeichnet, dass** der Klebstoff ein Präpolymer mit der Formel 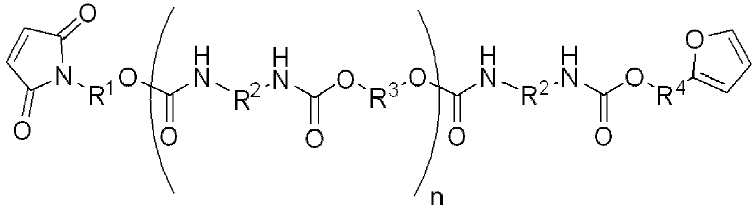 mit
R¹ und R⁴ unabhängig voneinander C₁-C₆-Alkyl, insbesondere Methyl oder Ethyl, R² Polyester, Polyurethan oder Polyacrylat, R³ Polyurethan, Polyether, Polyester oder Polyacrylat enthält.

9. Verbundsystem nach einem der vorhergehenden Ansprüche,
**dadurch gekennzeichnet, dass** die Materiallagen ausgewählt sind aus der Gruppe bestehend aus Polymerfolien, Papierlagen, Aluminiumfolien oder Verbunden hiervon, die zusätzlich bedruckt, beschichtet oder metallbedampft sein können, wobei die Materiallagen bevorzugt zerstörungsfrei separierbar sind.

10. Verbundsystem nach dem vorhergehenden Anspruch,
**dadurch gekennzeichnet, dass** die Polymerfolien gebildet sind aus Polymeren der Gruppe bestehend aus
• Polyolefine, insbesondere Polyethylen und Polypropylen,
• Polyamide, insbesondere aus der Gruppe der aliphatischen oder teilaromatischen Polyamide,
• Polyester, insbesondere Polyethylenterephthalat,
• Polystyrol sowie
• deren Copolymere und Blends.

11. Verbundsystem nach einem der vorhergehenden Ansprüche,
**dadurch gekennzeichnet, dass** das Mehrlagen-Verbundsystem ausgewählt ist aus der Gruppe der Verpackungen, insbesondere in Form von Flaschen, Becher, Tuben, Schalen und Folien, Etiketten oder Mehrschicht-Folien.

12. Verfahren zur Herstellung eines mehrlagigen Verbundsystems mit mindestens zwei Materiallagen, bei dem
a) zwischen benachbarten Materiallagen zumindest bereichsweise ein Klebstoff aufgetragen wird, wobei der Klebstoff eine Zersetzungstemperatur T_{ZK} im Bereich von 50°C bis zur Auflösungstemperatur aufweist und die stoffschlüssige Verbindung zwischen den Materiallagen bei Erreichen der Zersetzungstemperatur T_{ZK} aufgelöst wird,
b) durch eine Aktivierung der Klebstoff die stoffschlüssige Verbindung zwischen Materiallagen erzeugt wird.

13. Verfahren nach Anspruch 12,
**dadurch gekennzeichnet, dass** der Klebstoff als Lösung aufgetragen wird und thermisch aktiviert wird oder der Klebstoff als Suspension aufgetragen wird und die Aktivierung durch Vertreiben des Suspensierungsmittels erfolgt.

14. Verfahren nach einem der Ansprüche 12 oder 13,
**dadurch gekennzeichnet, dass** der Klebstoff durch Bildung kovalenter Bindungen aktivierbar und bei der Zersetzungstemperatur T_{ZK} durch Spaltung dieser kovalenten Bindungen zersetzbar ist, insbesondere über
• eine Diels-Alder-Cycloaddition oder eine Hetero-Diels-Alder-Cycloaddition aktivierbar und über eine Retro-Diels-Alder-Reaktion oder eine Retro-Hetero-Diels-Alder-Reaktion
• eine nukleophile Addition von Isocyanaten und Imidazolen
• eine Carbendimerisierung
• eine reversible radikalische Kopplung zwischen TEMPO und Styrolradikalen.

15. Verfahren nach einem der Ansprüche 12 bis 14,
**dadurch gekennzeichnet, dass** der Klebstoff aus mindestens einem Dien, bevorzugt ausgewählt aus der Gruppe bestehend aus Furanen, Fulvenen, Anthracenen, Cyclopentadienen und Mischungen hiervon, besonders bevorzugt Furane mit Amin- und Hydroxyl-Funktionalisierung, und mindestens einem Dienophil, bevorzugt ausgewählt aus der Gruppe bestehend aus Maleimiden, Dithioestern, Tricyanoacrylaten, Nitrosocarbonylen, Dicyclopentadienen und Mischungen hiervon gebildet wird.

16. Verwendung eines Klebstoffs zur lösbaren stoffschlüssigen Verbindung von Materiallagen in Mehrlagen-Verbundsystemen, wobei der Klebstoff eine Zersetzungstemperatur T_{ZK} im Bereich von 50°C bis zur Auflösungstemperatur aufweist und bei Erreichen der Zersetzungstemperatur die stoffschlüssige Verbindung gelöst wird.

17. Verwendung nach dem vorhergehenden Anspruch,
**dadurch gekennzeichnet, dass** der Klebstoff durch eine reversible Cycloaddition aktiviert und bei der Zersetzungstemperatur T_{ZK} zersetzt wird, insbesondere über eine Diels-Alder-Cycloaddition aktiviert und über eine Retro-Diels-Alder-Reaktion zersetzt wird.
